# EUROPÄISCHE PATENTSCHRIFT

(11) **EP 3 989 030 B1**
(45) Veröffentlichungstag und Bekanntmachung des Hinweises auf die Patenterteilung: **18.02.2026**
(21) Anmeldenummer: 21200400.6
(22) Anmeldetag: 01.10.2021
(51) Int. Cl.: G05D 1/00

(54) **VERFAHREN ZUM BETREIBEN EINES ZUMINDEST TEILWEISE AUTOMATISIERT BETREIBBAREN FLURFÖRDERFAHRZEUGS**
METHOD FOR OPERATING AN AT LEAST PARTIALLY AUTOMATED INDUSTRIAL TRUCK
PROCÉDÉ DE FONCTIONNEMENT D'UN CHARIOT DE MANUTENTION AU MOINS EN PARTIE AUTOMATISÉ

(30) Priorität: 21.10.2020 DE 102020213299
(43) Veröffentlichungstag der Anmeldung: 27.04.2022
(73) Patentinhaber: Robert Bosch GmbH, 70442 Stuttgart (DE)
(72) Erfinder: Roethling, Frank, 70469 Stuttgart (DE); Brodt, Markus, 70597 Stuttgart (DE)

(56) Entgegenhaltungen:
- JP-A- 2015 170 284
- JP-B2- H0 685 135
- US-A1- 2014 316 633
- US-A1- 2019 220 005
- GUNTER ULLRICH ET AL: "Fahrerlose Transportsysteme: Eine Fibel - mit Praxisanwendungen - zur Technik - fur die Planung", 19 January 2011 (2011-01-19), XP055525050, ISBN: 978-3-8348-0791-5, Retrieved from the Internet <URL:https://www.vitalsource.com/products/fahrerlose-transportsysteme-gunter-ullrich-v9783834898906?duration=30> [retrieved on 20181119]
- ANONYMOUS FAHRTRICHTUNGSANZEIGER: "Fahrtrichtungsanzeiger - Wikipedia", 18 September 2020 (2020-09-18), pages 1 - 12, XP093218321, Retrieved from the Internet <URL:https://de.wikipedia.org/w/index.php?title=Fahrtrichtungsanzeiger&oldid=203761822>

## Beschreibung

Die Erfindung betrifft ein Verfahren zum Betreiben eines zumindest teilweise automatisiert betreibbaren Flurförderfahrzeugs. Weiterhin werden auch ein Computerprogramm, ein maschinenlesbares Speichermedium, ein Steuergerät sowie ein Flurförderfahrzeug angegeben.

Zumindest teilweise automatisiert oder sogar autonom betreibbare Flurförderfahrzeuge sind bekannt, diese können allgemein auch als (automatisierte bzw. autonome) Flurförderzeuge (engl.: *Automated Guided Vehicles*; kurz: AGVs) bezeichnet werden. Entsprechende Flurförderfahrzeuge sind beispielsweise in der EN 1525 definiert. Nach der EN 1525 muss ein Flurförderzeug, sobald es sich Stellen nähert, an denen es in mehr als eine Richtung weiterfahren kann, gut sichtbar die beabsichtigte Fahrtrichtung anzeigen.

In der US 2014/316633 A1, der US 2019/220005 A1, der Veröffentlichung Gunter Ullrich et al.: "Fahrerlose Transportsysteme: Eine Fibel - mit Praxisanwendungen - zur Technik - für die Planung", 19. Januar 2011 (2011-01-19), XP055525050, ISBN: 978-3-8348-0791-5, der JPH0685135B2 sowie in der JP2015170284A sind jeweils Verfahren zum Betreiben von zumindest teilweise automatisiert betreibbaren Flurförderfahrzeugen beschrieben. In dem Wikipedia-Artikel "Fahrtrichtungsanzeiger" vom 18. September 2020 wird offenbart, dass ein Ausfall eines Blinkers einem Fahrer eines Kraftfahrzeugs angezeigt werden kann.

Hiervon ausgehend liegt der Erfindung die Aufgabe zugrunde, die im Zusammenhang mit dem Stand der Technik beschriebenen Nachteile bzw. Probleme zumindest teilweise zu lösen. Insbesondere soll bei einem zumindest teilweise automatisiert betreibbaren Flurförderfahrzeug der Personenschutz bei Fahrtrichtungsänderungen verbessert werden.

Diese Aufgaben werden durch die Merkmale der jeweiligen unabhängigen Ansprüche gelöst. Vorteilhafte Ausgestaltungen ergeben sich aus den Unteransprüchen.

Hierzu trägt ein Verfahren zum Betreiben eines zumindest teilweise automatisiert betreibbaren Flurförderfahrzeugs bei, bei dem zumindest folgende Schritte automatisiert von dem Flurförderfahrzeug durchgeführt werden:
a) Erkennen, dass das Flurförderfahrzeug eine Stelle anfährt, an der es seine Fahrtrichtung ändern soll,
b) Prüfen mindestens eines vordefinierten Richtungsänderungskriteriums für die beabsichtigte Fahrtrichtungsänderung, wobei das mindestens eine vordefinierte Richtungsänderungskriterium verlangt, dass ein bestimmtes, für die beabsichtigte Fahrtrichtungsänderung anzuzeigendes Fahrtrichtungsänderungssignal (3) des Flurförderfahrzeugs (1) aktiviert ist,
c) Anhalten des Flurförderfahrzeugs, wenn das mindestens eine Richtungsänderungskriterium nicht erfüllt ist.

Die Schritte a), b) und c) können zur Durchführung des Verfahrens beispielsweise zumindest einmal und/oder wiederholt in der angegebenen Reihenfolge durchgeführt werden. Insbesondere der Schritte b) bzw. die Schritte b) und c) können dabei (ggf. auch während der Richtungsänderung weiterhin) mehrfach hintereinander wiederholt durchgeführt werden. Das Verfahren kann beispielsweise mittels eines hier auch beschriebenen Steuergeräts und/oder eines hier auch beschriebenen Flurförderfahrzeugs durchgeführt werden. Bei dem Verfahren können zumindest die Schritte a), b) und c) vorteilhaft autonom von dem Flurförderfahrzeug durchgeführt werden.

Das Verfahren trägt in vorteilhafter Weise dazu bei, dass der Personenschutz bei Fahrtrichtungsänderungen verbessert werden kann. Weiterhin kann das Verfahren dazu beitragen eine kontrollierte bzw. überwachte Kurvenfahrt, insbesondere mittels einer Überwachung der Fahrgeschwindigkeit und/oder der Rotationsgeschwindigkeit vorteilhaft automatisiert durchzuführen.

Bei dem Flurförderfahrzeug kann es sich beispielsweise um ein solches handeln, wie es in der EN 1525 definiert ist. Das Flurförderfahrzeug kann für einen zumindest teilweise automatisierten und/oder autonomen (Fahr-)Betrieb eingerichtet sein. Das Flurförderfahrzeug weist in der Regel eine Ladeplattform auf. Weiterhin kann das Flurförderfahrzeug einen Vorderaufbau aufweisen. Der Vorderaufbau kann hin zu der Ladeplattform eine im wesentlichen vertikale Rückwand aufweisen.

In Schritt a) erfolgt ein Erkennen, dass das Flurförderfahrzeug eine Stelle anfährt, an der es seine Fahrtrichtung ändern soll. Dies kann mit anderen Worten insbesondere auch so beschrieben werden, dass das Flurförderfahrzeug erkennt, dass es eine Stelle anfahren soll bzw. anfährt, an der es eine Fahrtrichtungsänderung vornehmen soll. Insbesondere wird erkannt, dass eine Weggabelung angefahren werden soll bzw. angefahren wird. Die Stelle kann beispielsweise ein bestimmter Punkt auf dem geplanten Fahrweg des Flurförderfahrzeugs sein.

In Schritt b) erfolgt ein Prüfen (bzw. Überwachen) mindestens eines vordefinierten Richtungsänderungskriteriums für die beabsichtigte Fahrtrichtungsänderung. Die beabsichtigte Fahrtrichtungsänderung kann insbesondere eine Richtungsänderung nach links oder eine Richtungsänderung nach rechts sein. Mit anderen Worten kann die Fahrtrichtungsänderung insbesondere einen Abbiegevorgang und/oder eine Kurvenfahrt betreffen. Es können in Schritt b) auch mehrere vordefinierten Richtungsänderungskriterien geprüft bzw. überwacht werden. Das Prüfen bzw. Überwachen kann permanent bzw. kontinuierlich durchgeführt werden. Das Prüfen bzw. Überwachen kann vor und/oder während der Fahrtrichtungsänderung bzw. vor und/oder während einer Kurvenfahrt durchgeführt werden.

In Schritt c) erfolgt ein Anhalten des Flurförderfahrzeugs, wenn das mindestens eine Richtungsänderungskriterium nicht erfüllt ist. In der Regel handelt es sich bei dem Richtungsänderungskriterium um ein positiv definiertes Kriterium. Insbesondere ist das Richtungsänderungskriterium als "nicht erfüllt" anzusehen, wenn ein (positiv definierter) erwarteter (Kriteriums-)Zustand nicht erreicht wird bzw. wurde. Dies bedeutet mit anderen Worten insbesondere, dass das Richtungsänderungskriterium beispielhaft dann "nicht erfüllt" ist, wenn eine Abweichung von einem (positiv definierten) erwarteten (Kriteriums-)Zustand vorliegt. Es kann nach Schritt c) auch eine Freigabe der Weiterfahrt des Flurförderfahrzeugs erfolgen, wenn das mindestens eine Richtungsänderungskriterium wieder erfüllt ist.

Zumindest das Prüfen bzw. Überwachen gemäß Schritt b) und/oder das ggf. erforderliche Anhalten gemäß Schritt c) kann vorteilhafterweise mit einem bestimmten Performance Level (kurz: PLr), insbesondere mit einem PLr d nach ISO 13849 durchgeführt werden.

Die Schritte a) bis c) oder zumindest die Schritte b) und c) oder insbesondere zumindest der Schritt b) kann bzw. können von einer Sicherheitssteuereinrichtung des Flurförderfahrzeugs, zum Beispiel einem Sicherheitssteuermodul eines Steuergeräts des Flurförderfahrzeugs durchgeführt werden, das zusätzlich zu einer Fahrsteuereinrichtung des Flurförderfahrzeugs, zum Beispiel umfassend ein Robotersteuermodul und/oder ein Bewegungssteuermodul des Steuergeräts des Flurförderfahrzeugs vorhanden ist. Die Fahrsteuereinrichtung, insbesondere das Bewegungssteuermodul bewirkt in der Regel die (tatsächliche) Fahr-Ansteuerung bzw. Fahroperation und deren Änderung(en), zum Beispiel durch entsprechende Ansteuerung bzw. Vorgabe von Soll-Drehzahlen der Motoren und/oder der angetriebenen Räder des Flurförderfahrzeugs. Zudem kann die Fahrsteuereinrichtung, insbesondere das Bewegungssteuermodul die Fahrtrichtungsanzeige, insbesondere mindestens ein anzuzeigendes Fahrtrichtungsänderungssignal vorgeben.

Das mindestens eine vordefinierte Richtungsänderungskriterium verlangt, dass ein bestimmtes, für die beabsichtigte Fahrtrichtungsänderung anzuzeigendes Fahrtrichtungsänderungssignal des Flurförderfahrzeugs aktiviert ist. In diesem Zusammenhang kann beispielsweise gefordert werden, dass ein bestimmter, die beabsichtigte Fahrtrichtungsänderung anzeigender Blinker oder eine bestimmte, die beabsichtigte Fahrtrichtungsänderung anzeigende Gruppe von Blinkern aktiviert ist (zum Beispiel: linke(r) Blinker für eine Richtungsänderung nach links und/oder rechte(r) Blinker für eine Richtungsänderung nach rechts). Dies kann zur Bereitstellung einer vorteilhaften Überwachung der Vorgaben zur Fahrtrichtungsanzeige, insbesondere zur Vermeidung von fehlerhaften Vorgaben beitragen.

Die (oben erläuterte) Sicherheitssteuereinrichtung, insbesondere das Sicherheitssteuermodul kann in diesem Zusammenhang prüfen bzw. überwachen, ob die Fahrtrichtungsanzeige korrekt bzw. passend zu der Fahr-Ansteuerung von der Fahrsteuereinrichtung vorgegeben wird bzw. wurde. Somit kann die Sicherheitssteuereinrichtung beispielsweise die Fahrsteuereinrichtung dahingehend überwachen, ob ein Abbiegesignal (Blinker) mit der tatsächlichen Fahr-Ansteuerung in Einklang steht.

Nach einer weiteren vorteilhaften Ausgestaltung wird vorgeschlagen, dass das mindestens eine vordefinierte Richtungsänderungskriterium verlangt, dass ein bestimmtes, für die beabsichtigte Fahrtrichtungsänderung anzuzeigendes Fahrtrichtungsänderungssignal des Flurförderfahrzeugs vor Einleitung der Richtungsänderung für eine vordefinierte Vorlaufzeit aktiv war. Dies trägt in vorteilhafter Weise dazu bei, dass Personen im Umfeld des Flurförderfahrzeugs ausreichend Zeit haben, das Fahrtrichtungsänderungssignal wahrzunehmen, bevor das Flurförderfahrzeugs seine Fahrtrichtung ändert und/oder nicht rechtzeitig angezeigte Fahrtrichtungsänderung vorteilhaft verhindert werden können.

Nach einer weiteren vorteilhaften Ausgestaltung wird vorgeschlagen, dass das mindestens eine vordefinierte Richtungsänderungskriterium verlangt, dass die Fahrgeschwindigkeit des Flurförderfahrzeugs kleiner oder gleich einem vordefinierten Grenzwert ist. Hierbei ist insbesondere ein Grenzwert für die Kurvenfahrt kleiner als ein Grenzwert für die Geradeausfahrt. Dies kann auch zur Verbesserung des Personenschutzes beitragen, da Personen im Umfeld des Flurförderfahrzeugs auf eine (im Vergleich zur Geradeausfahrt) langsamere Richtungsänderung der Flurförderfahrzeugs in der Regel besser reagieren können.

Nach einer weiteren vorteilhaften Ausgestaltung wird vorgeschlagen, dass das mindestens eine vordefinierte Richtungsänderungskriterium verlangt, dass die Rotationsgeschwindigkeit des Flurförderfahrzeugs kleiner oder gleich einem in Abhängigkeit von der (linearen) Fahrgeschwindigkeit des Flurförderfahrzeugs vordefinierten Grenzwert ist. Weiterhinkann kann der Grenzwert für die Rotationsgeschwindigkeit in Abhängigkeit von der Art der Richtungsänderung, insbesondere nach links (positiver Grenzwert für die Rotationsgeschwindigkeit) oder nach rechts (negativer Grenzwert für die Rotationsgeschwindigkeit) definiert sein. Die Abhängigkeit der Rotationsgeschwindigkeit von der (linearen) Fahrgeschwindigkeit kann in vorteilhafter Weise dazu beitragen, dass eine vorteilhafte Geradlinigkeit bei der Kurvenfahrt erreicht und/oder ein bestimmter, insbesondere minimal zu fahrender Kurvenradius kontrolliert bzw. überwacht eingehalten werden kann.

In diesem Zusammenhang kann das Richtungsänderungskriterium beispielsweise auch (alternativ oder kumulativ) in Abhängigkeit von der Fahrtrichtungsänderungsanzeige und/oder dem Fahrtrichtungsänderungssignal vordefiniert sein. So kann beispielsweise das die Rotationsgeschwindigkeit betreffende Richtungsänderungskriterium in Abhängigkeit davon vordefiniert sein, ob mindestens eine linkes Fahrtrichtungsänderungssignal oder mindestens ein rechtes Fahrtrichtungsänderungssignal aktiv ist. Dies kann in vorteilhafter Weise auch zu einem vom Fahrtrichtungsänderungssignal (Blinken) abhängigen, möglichst sicheren Überwachen des Kurvenfahrradius beitragen.

Insbesondere kann die (ober erläuterte) Sicherheitssteuereinrichtung, insbesondere das Sicherheitssteuermodul in diesem Zusammenhang prüfen bzw. überwachen, ob eine erwartete (insbesondere von der Fahrsteuereinrichtung vorgegebene und/oder angesteuerte) Kurvenspur eingehalten wird. In diesem Zusammenhang kann beispielsweise vorgesehen sein, dass die Sicherheitssteuereinrichtung bei Abweichungen von einer erwarteten Kurvenspur das Flurförderfahrzeug anhält.

Nach einer weiteren vorteilhaften Ausgestaltung wird vorgeschlagen, dass das mindestens eine vordefinierte Richtungsänderungskriterium (zumindest auch dann bzw. auch dann noch) geprüft wird, nachdem eine Kurvenfahrt eingeleitet wurde. Dies kann mit anderen Worten insbesondere auch so beschrieben werden, dass das mindestens eine vordefinierte Richtungsänderungskriterium weiterhin geprüft wird, nachdem eine Kurvenfahrt eingeleitet wurde. Beispielsweise kann das mindestens eine vordefinierte Richtungsänderungskriterium vor und während der Kurvenfahrt geprüft werden.

Nach einem weiteren Aspekt wird ein Computerprogramm zur Durchführung eines hier beschriebenen Verfahrens vorgeschlagen. Dies betrifft mit anderen Worten insbesondere ein Computerprogramm(-produkt), umfassend Befehle, die bei der Ausführung des Programms durch einen Computer diesen veranlassen, ein hier beschriebenes Verfahren auszuführen.

Nach einem weiteren Aspekt wird auch ein maschinenlesbares Speichermedium vorgeschlagen, auf dem das Computerprogramm gespeichert ist. Regelmäßig handelt es sich bei dem maschinenlesbaren Speichermedium um einen computerlesbaren Datenträger.

Nach einem weiteren Aspekt wird auch ein Steuergerät für ein zumindest teilweise automatisiert betreibbares Flurförderfahrzeug vorgeschlagen, wobei das Steuergerät zur Durchführung eines hier beschriebenen Verfahrens eingerichtet ist. Das Steuergerät (Controller) kann beispielsweise einen Rechner umfassen, der Befehle ausführen kann, um das Verfahren auszuführen. Hierzu kann der Rechner bzw. das Steuergerät beispielsweise das angegebene Computerprogramm ausführen. Beispielsweise kann der Rechner bzw. das Steuergerät auf das angegebene Speichermedium zugreifen, um das Computerprogramm ausführen zu können. Bei dem Steuergerät kann es sich beispielsweise um ein Sicherheitssteuergerät handeln. Alternativ oder kumulativ kann das Verfahren beispielsweise von einem Sicherheitssteuermodul des Steuergeräts durchgeführt werden. Darüber hinaus kann das Steuergerät auch ein Robotersteuermodul und/oder ein Bewegungssteuermodul umfassen.

Nach einem weiteren Aspekt wird auch ein zumindest teilweise automatisiert betreibbares Flurförderfahrzeug mit dem Steuergerät vorgeschlagen. Alternativ oder kumulativ kann dies auch als ein zumindest teilweise automatisiert betreibbares Flurförderfahrzeug beschrieben werden, das zur Durchführung eines hier beschriebenen Verfahrens eingerichtet ist. Das Flurförderfahrzeugs ist darüber hinaus in der Regel für einen zumindest teilweise automatisierten oder autonomen (Fahr-)Betrieb eingerichtet.

Zusammenfassend kann eine besonders vorteilhafte Ausgestaltung der hier beschriebenen Lösung mit anderen Worten insbesondere auch so beschrieben werden, dass eine Sicherheitssteuerung (SCU) bei einem zumindest teilweise automatisiert betreibbaren Flurförderfahrzeug (insbesondere autonomen Transportfahrzeug) überwacht, ob ein Abbiegesignal (Blinker) mit der tatsächlichen Fahr-Ansteuerung des Fahrzeugs in Einklang steht. Dabei kann weiterhin vorgesehen sein, dass bei Abweichungen von einer erwarteten Kurvenspur das Fahrzeug gestoppt und so in einen sicheren Zustand gebracht wird.

Die im Zusammenhang mit dem Verfahren erörterten Details, Merkmale und vorteilhaften Ausgestaltungen können entsprechend auch bei dem hier vorgestellten Computerprogramm und/oder dem Speichermedium und/oder dem Steuergerät und/oder dem Flurförderfahrzeug auftreten und umgekehrt. Insoweit wird auf die dortigen Ausführungen zur näheren Charakterisierung der Merkmale vollumfänglich Bezug genommen.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigt beispielhaft und schematisch:
- Fig. 1:: einen beispielhaften Ablauf des hier vorgestellten Verfahrens,
- Fig. 2:: eine Ausführungsform eines hier beschriebenen Flurförderfahrzeugs in Schnittdarstellung,
- Fig. 3:: eine grafische Darstellung von vordefinierten Grenzwerten für eine Ausführungsvariante des Verfahrens, und
- Fig. 4-7:: eine vorteilhafte Anwendung des hier beschriebenen Verfahrens in Draufsicht.

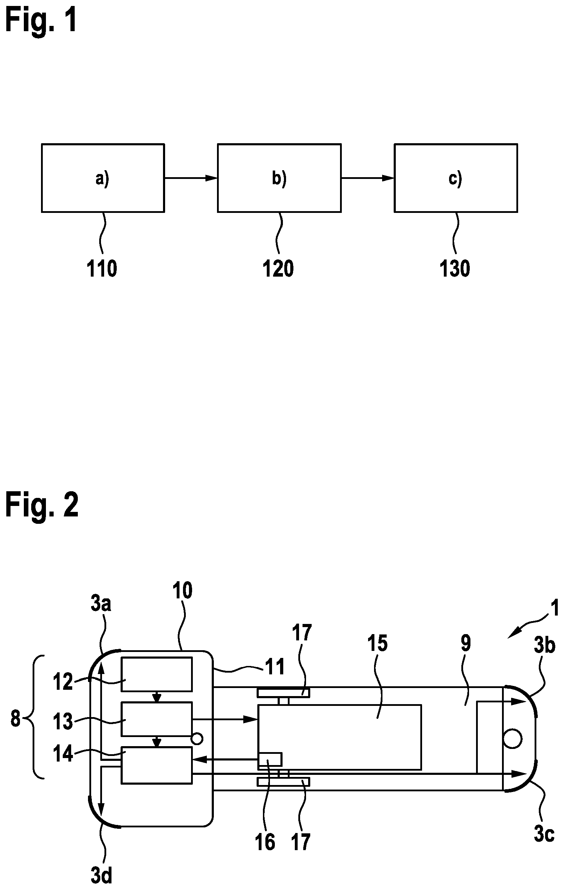

Fig. 1 zeigt schematisch einen beispielhaften Ablauf des hier vorgestellten Verfahrens. Das Verfahren dient zum Betreiben eines zumindest teilweise automatisiert betreibbaren Flurförderfahrzeugs 1 (vgl. Fig. 2 und 4 bis 7). Die mit den Blöcken 110, 120 und 130 dargestellte Reihenfolge der Schritte a), b) und c) ist beispielhaft und kann zur Durchführung des Verfahrens beispielsweise zumindest einmal in der dargestellten Reihenfolge durchlaufen werden. Der Schritt b) kann dabei (ggf. auch während der Richtungsänderung weiterhin) mehrfach hintereinander wiederholt durchgeführt werden. Darüber hinaus werden die Schritte a) bis c) automatisiert von dem Flurförderfahrzeug (1) durchgeführt.

In Block 110 erfolgt gemäß Schritt a) ein Erkennen, dass das Flurförderfahrzeug 1 eine Stelle 2 anfährt, an der es seine Fahrtrichtung ändern soll. In Block 120 erfolgt gemäß Schritt b) ein Prüfen mindestens eines vordefinierten Richtungsänderungskriteriums für die beabsichtigte Fahrtrichtungsänderung. In Block 130 erfolgt gemäß Schritt c) ein Anhalten des Flurförderfahrzeugs 1, wenn das mindestens eine Richtungsänderungskriterium nicht erfüllt ist.

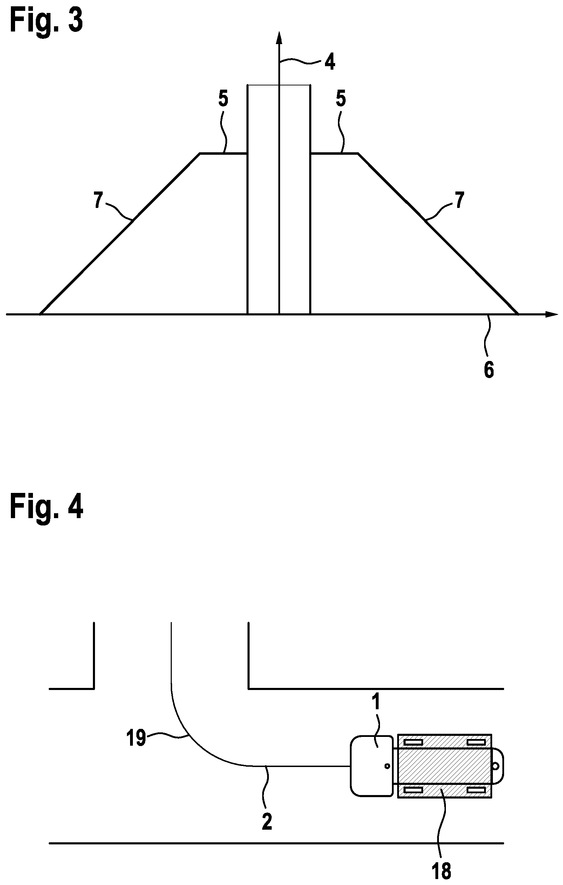

Fig. 2 zeigt schematisch eine Ausführungsform eines hier beschriebenen Flurförderfahrzeugs 1 in Schnittdarstellung. Das Flurförderfahrzeug 1 ist für einen zumindest teilweise automatisierten oder autonomen (Fahr-)Betrieb eingerichtet. Weiterhin ist das Flurförderfahrzeug 1 zur Durchführung eines hier beschriebenen Verfahrens eingerichtet. Hierzu weist das Flurförderfahrzeug 1 beispielhaft ein hier auch beschriebenes Steuergerät 8 auf. Das Flurförderfahrzeug 1 weist hier beispielhaft weiterhin einen Vorderaufbau 10 und eine Ladeplattform 9 auf. Beispielsweise hat der Vorderaufbau 10 hier hin zu der Ladeplattform 9 eine im wesentlichen vertikale Rückwand 11. Die Ladeplattform 9 dient insbesondere zur Aufnahme eines Warenträgers 18 (vgl. Fig. 4), der mittels des Flurförderfahrzeugs 1 transportiert werden kann.

Das Flurförderfahrzeugs 1 weist zur Fahrtrichtungsanzeige in der Regel vier Fahrtrichtungsänderungssignale 3 auf, die insbesondere in der Art eines Blinkers ausgestaltet sein können. Bei den Fahrtrichtungsänderungssignalen 3 handelt es sich üblicherweise um ein vorderes, rechtes Fahrtrichtungsänderungssignal 3a, ein hinteres, rechtes Fahrtrichtungsänderungssignal 3b, ein hinteres, linkes Fahrtrichtungsänderungssignal 3c und ein vorderes, linkes Fahrtrichtungsänderungssignal 3d (betrachtet in Fahrtrichtung).

Das Steuergerät 8 umfasst hier beispielhaft ein Robotersteuermodul 12 (engl.: Robot Control Unit; kurz: RCU), ein Bewegungssteuermodul 13 (engl.: Motion Control Unit; kurz MCU) und ein Sicherheitssteuermodul 14 (engl.: Safety Control Unit; kurz SCU). Zur Durchführung des Verfahrens kann das Steuergerät 8 beispielsweise für nachfolgend beschriebene Vorgehensweise eingerichtet sein.

Das Robotersteuermodul 12 gibt hier beispielsweise die gewünschte Fahrgeschwindigkeit 4 und die Fahrtrichtungsanzeige, insbesondere die zu betätigenden Fahrtrichtungsänderungssignale 3 (rechts, links, aus) an das Bewegungssteuermodul 13. Dies stellt ein Beispiel dafür dar, dass und ggf. wie gemäß Schritt a) (von dem Robotersteuermodul 12 und/oder dem Bewegungssteuermodul 13) erkannt werden kann, dass das Flurförderfahrzeug 1 eine Stelle 2 anfährt, an der es seine Fahrtrichtung ändern soll.

Das Bewegungssteuermodul 13 gibt die gewünschte Fahrtrichtungsanzeige, insbesondere die zu betätigenden Fahrtrichtungsänderungssignale 3 (rechts, links, aus) hier beispielhaft weiter an das Sicherheitssteuermodul 14. Somit kann beispielhaft auch das Sicherheitssteuermodul 14 gemäß Schritt a) erkennen, dass das Flurförderfahrzeug 1 eine Stelle 2 anfährt, an der es seine Fahrtrichtung ändern soll. Zudem berechnet das Bewegungssteuermodul 13 hier beispielhaft die Solldrehzahlen der angetriebenen Räder 17 des Flurförderfahrzeugs 1 und gibt diese an eine Motoreinrichtung 15 des Flurförderfahrzeugs 1.

Die Motoreinrichtung 1 kann einen oder mehrere (Elektro-)Motoren aufweisen, die ggf. über ein Getriebe oder direkt mit den angetriebenen Rädern 17 des Flurförderfahrzeugs, ggf. im Sinne individuell angetriebener Räder wirkverbunden sind. Weiterhin ist in Fig. 2 gezeigt, dass das Flurförderfahrzeug 1 beispielsweise einen oder mehrere Drehzahlgeber 16 (zum Beispiel SIL2-Drehgeber) aufweisen kann, welche die Ist-Drehzahlen der Motoren bzw. Räder 17 an das Sicherheitssteuermodul 14 übermitteln können.

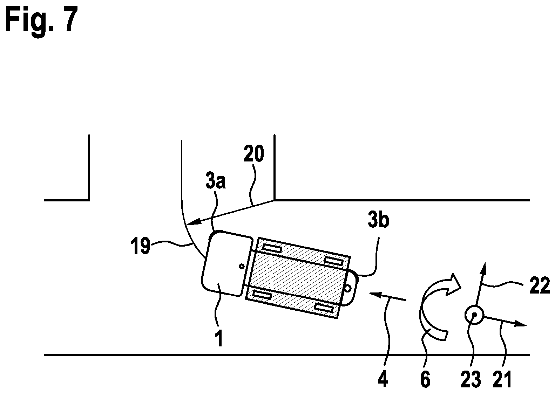

Das Sicherheitssteuermodul 14 betätigt hier beispielhaft die Fahrtrichtungsänderungssignale 3 (rechts, links, aus) bzw. setzt die Blinker (rechts, links, aus) in Abhängigkeit von der gewünschten Fahrtrichtungsanzeige. Darüber hinaus kann das Sicherheitssteuermodul 14 hier beispielsweise die Zeitdauer stoppen, die die Fahrtrichtungsänderungssignale 3 bzw. Blinker aktiv sind. Das Sicherheitssteuermodul 14 berechnet hier beispielhaft zudem aus den Ist-Drehzahlen die momentane (lineare) Fahrgeschwindigkeit 4 und die (momentane) Rotationsgeschwindigkeit 5 (um die Hochachse 23, vgl. Fig. 7) des Flurförderfahrzeugs 1.

Insbesondere kann das Sicherheitssteuermodul 14 die momentane (lineare) Fahrgeschwindigkeit 4 (permanent) überwachen. Dabei kann das Sicherheitssteuermodul 14 bei Geradeausfahrt das Flurförderfahrzeugs 1 bei einer (linearen) Fahrgeschwindigkeit 4 oberhalb eines vordefinierbaren Grenzwerts von beispielsweise 1.000 mm/s vorteilhaft sicher mit beispielsweise einem bestimmten Performance Level (kurz: PLr), insbesondere mit einem PLr d nach ISO 13849 anhalten.

Weiterhin kann das Sicherheitssteuermodul 14 hier beispielhaft (permanent) die momentane Rotationsgeschwindigkeit 5 (um die Hochachse 23, vgl. Fig. 7) des Flurförderfahrzeugs 1 überwachen. Insbesondere kann das Sicherheitssteuermodul 14 bei Geradeausfahrt das Flurförderfahrzeugs 1 bei einer Rotationsgeschwindigkeit 5 (Formeilzeichen: ω) außerhalb eines vordefinierbaren, erlaubten Wertebereichs von beispielsweise -0,14/s < ω < +0,14/s vorteilhaft sicher mit beispielsweise einem bestimmten Performance Level (kurz: PLr), insbesondere mit einem PLr d nach ISO 13849 anhalten.

Zudem kann hier beispielhaft das Sicherheitssteuermodul 14 zum Prüfen mindestens eines vordefinierten Richtungsänderungskriteriums für die beabsichtigte Fahrtrichtungsänderung eingerichtet sein. Als Richtungsänderungskriterium bzw. Richtungsänderungskriterien kann das Sicherheitssteuermodul 14 insbesondere prüfen, ob das richtige Fahrtrichtungsänderungssignal 3 aktiviert ist, ob das Fahrtrichtungsänderungssignal 3 des Flurförderfahrzeugs 1 vor Einleitung der Richtungsänderung für eine vordefinierte Vorlaufzeit aktiv war, ob die Fahrgeschwindigkeit 4 des Flurförderfahrzeugs 1 kleiner oder gleich eines vordefinierten Grenzwerts 5 ist und/oder ob die Rotationsgeschwindigkeit 6 des Flurförderfahrzeugs 1 kleiner oder gleich eines in Abhängigkeit von der Fahrgeschwindigkeit 4 des Flurförderfahrzeugs 1 vordefinierten Grenzwerts 7 ist.

Das Sicherheitssteuermodul 14 überwacht, ob der richtige Blinker oder der falsche Blinker bzw. kein Blinker aktiviert wurde.

Weiterhin beispielhaft kann das Sicherheitssteuermodul 14 überwachen, ob der Blinker für die beabsichtigte Fahrtrichtung bzw. Fahrtrichtungsänderung für die gesamte Vorlaufzeit bzw. noch nicht für die gesamte Vorlaufzeit aktiv war. Dies stellt ein Beispiel dafür dar, dass und ggf. wie das mindestens eine vordefinierte Richtungsänderungskriterium verlangen kann, dass ein bestimmtes, für die beabsichtigte Fahrtrichtungsänderung anzuzeigendes Fahrtrichtungsänderungssignal 3 des Flurförderfahrzeugs 1 vor Einleitung der Richtungsänderung für eine vordefinierte Vorlaufzeit aktiv war.

Weiterhin beispielhaft kann das Sicherheitssteuermodul 14 überwachen, ob die momentane (lineare) Fahrgeschwindigkeit 4 größer als ein vordefinierter Grenzwert 5 (beispielsweise 700mm/s für Kurvenfahrt) oder kleiner-gleich des vordefinierten Grenzwerts 5 ist. Dies stellt ein Beispiel dafür dar, dass und ggf. wie das mindestens eine vordefinierte Richtungsänderungskriterium verlangen kann, dass die Fahrgeschwindigkeit 4 des Flurförderfahrzeugs 1 kleiner oder gleich eines vordefinierten Grenzwerts 5 ist.

Weiterhin beispielhaft kann das Sicherheitssteuermodul 14 überwachen, ob ein (gegenüber dem oben für die Geradeausfahrt erläuterten) erweiterter Wertebereich der Rotationsgeschwindigkeit (Formelzeichen: ω) von beispielsweise ω_{max,rechts} = -1,05/s - v/m (Blinker rechts) bis ω_{max,links} = 1,05/s - v/m (Blinker links) überschritten wird (bzw. wurde) oder eingehalten wird. Dabei stellt v das Formelzeichen für die (lineare) Fahrgeschwindigkeit 4 dar. Dies betrifft in alternativer Darstellung einen Wertebereich von -1,05/s - v/m < ω < 1,05/s - v/m. Dies stellt ein Beispiel dafür dar, dass und ggf. wie das mindestens eine vordefinierte Richtungsänderungskriterium verlangen kann, dass die Rotationsgeschwindigkeit 6 des Flurförderfahrzeugs 1 kleiner oder gleich eines in Abhängigkeit von der Fahrgeschwindigkeit 4 des Flurförderfahrzeugs 1 vordefinierten Grenzwerts 7 ist. Der Grenzwert 7 kann dabei (auch) abhängig von der Richtung der Richtungsänderung (links/rechts) vordefiniert sein, beispielsweise als -1,05/s - v/m für eine Richtungsänderung nach rechts und als +1,05/s - v/m für eine Richtungsänderung nach links (wobei die Vorzeichen, je nach Definition der Bezugsrotationsrichtung, auch umgekehrt definiert sein können).

Die ersten beiden der genannten Richtungsänderungskriterien werden vorzugsweise vor Einleiten der Kurvenfahrt geprüft und insbesondere wird dabei die Kurvenfahrt nur dann eingeleitet, wenn die Prüfung erfolgreich war. Darüber hinaus können diese Richtungsänderungskriterien, insbesondere das erste der genannten Richtungsänderungskriterien auch während der Kurvenfahrt (weiter) geprüft werden. Insbesondere die letzten beiden der genannten Richtungsänderungskriterien werden vorzugsweise zumindest auch während der Kurvenfahrt geprüft, um insbesondere eine vorteilhafte Geradlinigkeit bei der Kurvenfahrt zu erreichen und/oder einen bestimmten, insbesondere minimal zu fahrenden Kurvenradius kontrolliert bzw. überwacht einzuhalten. Dies stellt auch ein Beispiel dafür dar, dass und ggf. wie das mindestens eine vordefinierte Richtungsänderungskriterium (auch) geprüft wird, nachdem eine Kurvenfahrt eingeleitet wurde. Mit anderen Worten kann das mindestens eine vordefinierte Richtungsänderungskriterium hier beispielhaft vor und während der Kurvenfahrt geprüft werden.

Das Sicherheitssteuermodul 14 kann das Flurförderfahrzeug 1 vorteilhaft sicher mit beispielsweise einem bestimmten Performance Level (kurz: PLr), insbesondere mit einem PLr d nach ISO 13849 anhalten, wenn eines oder mehrere der Richtungsänderungskriterien nicht erfüllt sind. Dies stellt ein Beispiel dafür dar, dass und ggf. wie gemäß Schritt c) ein Anhalten des Flurförderfahrzeugs 1 erfolgen kann, wenn das mindestens eine Richtungsänderungskriterium nicht erfüllt ist.

So kann das Sicherheitssteuermodul 14 beispielsweise bei Kurvenfahrt das Flurförderfahrzeugs 1 bei einer (linearen) Fahrgeschwindigkeit 4 oberhalb eines vordefinierbaren Grenzwerts 5 von beispielsweise 700 mm/s vorteilhaft sicher mit beispielsweise einem bestimmten Performance Level (kurz: PLr), insbesondere mit einem PLr d nach ISO 13849 anhalten. Weiterhin kann das Sicherheitssteuermodul 14 bei Kurvenfahrt das Flurförderfahrzeugs 1 bei einer Rotationsgeschwindigkeit 5 (Formeilzeichen: ω) außerhalb eines vordefinierbaren, erlaubten Wertebereichs von beispielsweise -1,05/s - v/m < ω < +1,05/s - v/m vorteilhaft sicher mit beispielsweise einem bestimmten Performance Level (kurz: PLr), insbesondere mit einem PLr d nach ISO 13849 anhalten.

Es können grundsätzlich auch mehrere der beispielhaft genannten Richtungsänderungskriterien insbesondere zumindest teilweise parallel oder gleichzeitig geprüft werden. Gemäß einer besonders bevorzugten Kombination von zu prüfenden bzw. geprüften Richtungsänderungskriterien kann in Schritt b) beispielsweise wie folgt vorgegangen werden: Wenn der Blinker rechts (Fahrtrichtungsänderungssignale 3a und 3b) bzw. der Blinker links (Fahrtrichtungsänderungssignale 3c und 3d) für eine (die gesamte) vordefinierte Vorlaufzeit aktiv ist, erweitert das Sicherheitssteuermodul 14 den Wertebereich bei einer linearen Fahrgeschwindigkeit 4 von beispielhaft bis zu (maximal) 700 mm/s (Grenzwert 5) auf ω = 1,05/s - v/m (Blinker links) bzw. auf ω = -1,05/s - v/m (Blinker rechts) (Grenzwert 7). Bei einer Überschreitung des erweiterten Wertebereichs (bzw. des Grenzwerts 7) hält das Sicherheitssteuermodul 14 das Flurförderfahrzeug 1 vorteilhaft sicher mit PLr d nach ISO 13849 an. Die vorteilhafte Begrenzung der Rotationsgeschwindigkeit in Abhängigkeit von der linearen Geschwindigkeit kann in vorteilhafter Weise bei Kurvenfahrten zusätzlich zur Fahrstabilität des Flurförderfahrzeugs 1 beitragen.

Fig. 3 zeigt schematisch eine grafische Darstellung von vordefinierten Grenzwerten 5, 7 für eine Ausführungsvariante des Verfahrens. Gemäß der Darstellung nach Fig. 3 ist die (lineare) Fahrgeschwindigkeit 4 über der Rotationsgeschwindigkeit 6 aufgetragen.

In diesem Zusammenhang wird insbesondere zur Erläuterung bzw. Definition der linearen Richtung (Längsrichtung) und der Rotationsrichtung auch auf die beispielhaft in Fig. 7 eingetragenen Bezugsachsen des Flurförderfahrzeugs 1 hingewiesen, insbesondere die Längsachse 21, die Querachse 22 und die Hochachse 23. Die lineare Fahrgeschwindigkeit betrifft üblicherweise die Geschwindigkeit bzw. Geschwindigkeitskomponente des Flurförderfahrzeugs 1 parallel zur Längsachse 21. Die Rotationsgeschwindigkeit 6 betrifft üblicherweise die Drehgeschwindigkeit um die Hochachse 23.

Während der Kurvenfahrt kann gemäß einer vorteilhaften Ausgestaltung insbesondere geprüft bzw. überwacht werden, dass das Wertepaar aus Fahrgeschwindigkeit 4 und Rotationsgeschwindigkeit 6 innerhalb bzw. unterhalb der in Fig. 3 beispielhaft veranschaulichten Grenzen bleibt. Die Grenzen werden dabei durch den oberen Grenzwert 5 für die (lineare) Fahrgeschwindigkeit 4 bei Kurvenfahrt und den Grenzwert 7 für die Rotationsgeschwindigkeit gebildet. Hierbei gilt der Grenzwert 7 für die Rotationsgeschwindigkeit auf der rechten Seite der Fig. 3 für eine Kurvenfahrt nach links und der Grenzwert 7 auf der linken Seite der Fig. 3 für eine Kurvenfahrt nach rechts.

Es ist auch zu erkennen, dass der Grenzwert 7 in Abhängigkeit von der Fahrgeschwindigkeit 4 vordefiniert ist. Beispielsweise kann der Verlauf des Grenzwerts 7 auf der rechten Seite der Fig. 3 über die Gleichung ω_{max,links} = 1,05/s - v/m (Blinker links) und der Verlauf des Grenzwerts 7 auf der linken Seite der Fig. 3 über die Gleichung ω_{max,rechts} = -1,05/s - v/m vordefiniert sein. Dabei stehen die Formelzeichen ω für die Rotationsgeschwindigkeit und v für die Fahrgeschwindigkeit, s für Sekunde und m für Meter. Die inneren vertikalen Linien in Fig. 2 sind lediglich der Vollständigkeit halber eingetragen und veranschaulichen eine für die Kurvenfahrt erforderliche Mindestrotationsgeschwindigkeit. Entsprechende Mindestrotationsgeschwindigkeiten sind in dem betreffenden Gebiet allgemein bekannt, sodass hierauf an dieser Stelle nicht näher eingegangen wird.

Fig. 4 bis 7 zeigen schematisch eine vorteilhafte Anwendung des hier beschriebenen Verfahrens in Draufsicht. Dabei ist der geplante Fahrweg 19, den das Flurförderfahrzeug 1 automatisiert abfahren soll, gestrichelt eingetragen. Entlang dieses Fahrwegs 19 ist die Stelle 2 eingetragen, an der das Flurförderfahrzeug 1 seine Fahrtrichtung ändern soll.

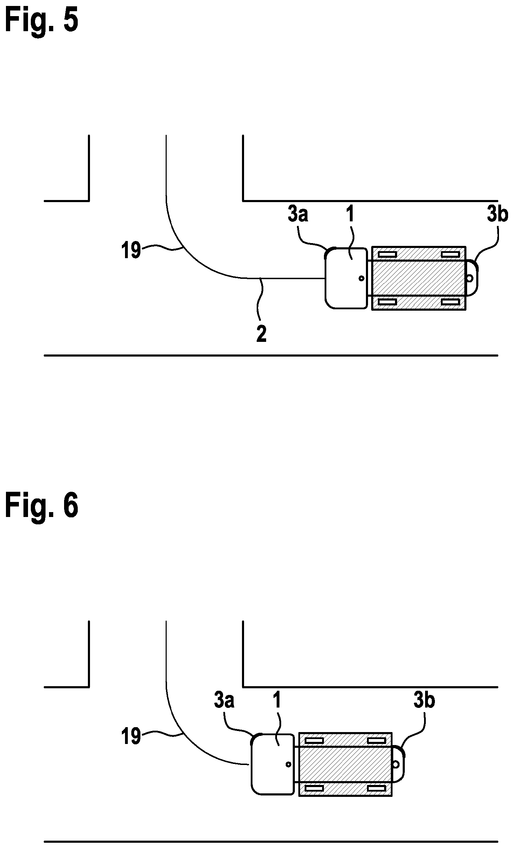

In Fig. 4 ist beispielhaft die Situation veranschaulicht, in der sich das Flurförderfahrzeug 1 der Stelle 2 nähert, an der es seine Fahrtrichtung ändern soll bzw. an der es in mehr als eine Richtung weiterfahren kann. In Fig. 5 ist beispielhaft gezeigt, dass das Flurförderfahrzeug 1 rechtzeitig, insbesondere mit einer vordefinierten Vorlaufzeit die beabsichtigte Fahrtrichtung anzeigt (in diesem Beispiel: nach rechts, mittels der Fahrtrichtungsänderungssignale 3a und 3b).

In Fig. 6 wurde die Stelle 2 erreicht, an der die Kurvenfahrt beginnt. Gemäß einer vorteilhaften Ausgestaltung des beschriebenen Verfahrens kann ab diesem Moment eine kontrollierte bzw. überwachte Kurvenfahrt mittels einer Überwachung der Fahrgeschwindigkeit 4 und der Rotationsgeschwindigkeit 6 (vgl. Fig. 7) automatisiert durchgeführt werden. Hierzu können die nachfolgend beschriebenen Ausführungsbeispiele zu den oben erläuterten Richtungsänderungskriterien beitragen:
Sobald die Kurvenfahrt beginnt und die Rotationsgeschwindigkeit den Wertebereich der Geradeausfahrt verlässt (-0,14/s < ω < 0,14/s), hält das Flurförderfahrzeug 1 an, wenn der falsche bzw. kein Blinker aktiviert wurde und optional, wenn:
- der Blinker für die beabsichtigte Fahrtrichtung noch nicht die Vorlaufzeit aktiv war, und/oder
- die lineare Geschwindigkeit oberhalb eines Grenzwertes liegt (zum Beispiel: v > 700mm/s beträgt), und/oder
- der erweiterte Wertebereich der Rotationsgeschwindigkeit von beispielsweise ω_{max,links} = 1,05/s - v/m (Blinker links) bis ω_{max,rechts} = -1,05/s - v/m (Blinker rechts) überschritten wird bzw. wurde.

In Fig. 7 ist beispielhaft eine Kurvenfahrt veranschaulicht, bei der das mindestens eine Richtungsänderungskriterium, insbesondere alle Richtungsänderungskriterien (Kurvenfahrbedingungen) erfüllt sind. Wird das mindestens eine Richtungsänderungskriterium bzw. werden alle Richtungsänderungskriterien eingehalten, hält das Flurförderfahrzeug 1 normalerweise (außer beispielsweise bei einer drohenden Kollision mit einem anderen Objekt oder einer Person) nicht an. Gegebenenfalls kann die Kurvenfahrt fortgesetzt werden, sobald das mindestens eine Richtungsänderungskriterium, insbesondere alle Richtungsänderungskriterien wieder erfüllt ist bzw. sind.

In Fig. 7 ist weiterhin beispielhaft gezeigt, dass das gemäß einer vorteilhaften Ausgestaltung verwendbare Richtungsänderungskriterium, welches verlangt, dass die Rotationsgeschwindigkeit 6 des Flurförderfahrzeugs 1 kleiner oder gleich eines in Abhängigkeit von der Fahrgeschwindigkeit 4 des Flurförderfahrzeugs 1 vordefinierten Grenzwerts 7 ist, in vorteilhafter Weise dazu beitragen kann, dass eine vorteilhafte Geradlinigkeit bei der Kurvenfahrt erreicht und/oder ein bestimmter, insbesondere minimal zu fahrender Kurvenradius 20 kontrolliert bzw. überwacht eingehalten werden kann.

Somit werden ein Verfahren, ein Computerprogramm, ein maschinenlesbares Speichermedium, ein Steuergerät sowie ein Flurförderfahrzeug angegeben, welche die im Zusammenhang mit dem Stand der Technik beschriebenen Nachteile bzw. Probleme zumindest teilweise lösen. Insbesondere kann bei einem zumindest teilweise automatisiert betreibbaren Flurförderfahrzeug der Personenschutz bei Fahrtrichtungsänderungen verbessert werden.

### Bezugszeichenliste

- 1: Flurförderfahrzeug
- 2: Stelle
- 3: Fahrtrichtungsänderungssignal
- 4: Fahrgeschwindigkeit
- 5: Grenzwert
- 6: Rotationsgeschwindigkeit
- 7: Grenzwert
- 8: Steuergerät
- 9: Ladeplattform
- 10: Vorderaufbau
- 11: Rückwand
- 12: Robotersteuermodul
- 13: Bewegungssteuermodul
- 14: Sicherheitssteuermodul
- 15: Motoreinrichtung
- 16: Drehzahlgeber
- 17: Rad
- 18: Warenträger
- 19: Fahrweg
- 20: Kurvenradius
- 21: Längsachse
- 22: Querachse
- 23: Hochachse

## Patentansprüche

1. Verfahren zum Betreiben eines zumindest teilweise automatisiert betreibbaren Flurförderfahrzeugs (1), bei dem zumindest folgende Schritte automatisiert von dem Flurförderfahrzeug (1) durchgeführt werden:
a) Erkennen, dass das Flurförderfahrzeug (1) eine Stelle (2) anfährt, an der es seine Fahrtrichtung ändern soll, **gekennzeichnet durch**
b) Prüfen mindestens eines vordefinierten Richtungsänderungskriteriums für die beabsichtigte Fahrtrichtungsänderung, wobei das mindestens eine vordefinierte Richtungsänderungskriterium verlangt, dass ein bestimmtes, für die beabsichtigte Fahrtrichtungsänderung anzuzeigendes Fahrtrichtungsänderungssignal (3) des Flurförderfahrzeugs (1) aktiviert ist,
c) Anhalten des Flurförderfahrzeugs (1), wenn das mindestens eine Richtungsänderungskriterium nicht erfüllt ist.

2. Verfahren nach Anspruch 1, wobei das mindestens eine vordefinierte Richtungsänderungskriterium verlangt, dass ein bestimmtes, für die beabsichtigte Fahrtrichtungsänderung anzuzeigendes Fahrtrichtungsänderungssignal (3) des Flurförderfahrzeugs (1) vor Einleitung der Richtungsänderung für eine vordefinierte Vorlaufzeit aktiv war.

3. Verfahren nach einem der vorhergehenden Ansprüche, wobei das mindestens eine vordefinierte Richtungsänderungskriterium verlangt, dass die Fahrgeschwindigkeit (4) des Flurförderfahrzeugs (1) kleiner oder gleich eines vordefinierten Grenzwerts (5) ist.

4. Verfahren nach einem der vorhergehenden Ansprüche, wobei das mindestens eine vordefinierte Richtungsänderungskriterium verlangt, dass die Rotationsgeschwindigkeit (6) des Flurförderfahrzeugs (1) kleiner oder gleich eines in Abhängigkeit von der Fahrgeschwindigkeit (4) des Flurförderfahrzeugs (1) vordefinierten Grenzwerts (7) ist.

5. Verfahren nach einem der vorhergehenden Ansprüche, wobei das mindestens eine vordefinierte Richtungsänderungskriterium geprüft wird, nachdem eine Kurvenfahrt eingeleitet wurde.

6. Computerprogramm, umfassend Anweisungen, die, wenn sie von einem Computer ausgeführt werden, den Computer veranlassen, das Verfahren nach einem der Ansprüche 1 bis 5 auszuführen.

7. Maschinenlesbares Speichermedium, auf dem das Computerprogramm nach Anspruch 6 gespeichert ist.

8. Steuergerät (8) für ein zumindest teilweise automatisiert betreibbares Flurförderfahrzeug (1), eingerichtet zur Durchführung eines Verfahrens nach einem der Ansprüche 1 bis 5.

9. Zumindest teilweise automatisiert betreibbares Flurförderfahrzeug (1) mit einem Steuergerät (8) nach Anspruch 8.

## Claims

1. Method for operating an industrial truck (1) that can be operated in an at least partially automated manner, in which at least the following steps are carried out in an automated manner by the industrial truck (1):
a) detecting that the industrial truck (1) approaches a point (2) at which it is supposed to change its direction of travel, **characterized by**
b) checking at least one predefined direction change criterion for the intended change of direction of travel, the at least one predefined direction change criterion requiring a specific change of direction of travel signal (3) of the industrial truck (1) that can be displayed for the intended change of direction of travel to be activated,
c) stopping the industrial truck (1) if the at least one direction change criterion is not met.

2. Method according to Claim 1, wherein the at least one predefined direction change criterion requires a specific change of direction of travel signal (3) of the industrial truck (1) that can be displayed for the intended change of direction of travel to have been active for a predefined lead time prior to initiation of the change of direction.

3. Method according to either of the preceding claims, wherein the at least one predefined direction change criterion requires the driving velocity (4) of the industrial truck (1) to be less than or equal to a predefined limit value (5).

4. Method according to one of the preceding claims, wherein the at least one predefined direction change criterion requires the rotational velocity (6) of the industrial truck (1) to be less than or equal to a limit value (7) predefined on the basis of the driving velocity (4) of the industrial truck (1).

5. Method according to one of the preceding claims, wherein the at least one predefined direction change criterion is checked after cornering has been initiated.

6. Computer program, comprising instructions that, when executed by a computer, cause the computer to carry out the method according to one of Claims 1 to 5.

7. Machine-readable storage medium on which the computer program according to Claim 6 is stored.

8. Control unit (8) for an industrial truck (1) that can be operated in an at least partially automated manner, designed to carry out a method according to one of Claims 1 to 5.

9. Industrial truck (1) that can be operated in an at least partially automated manner, having a control unit (8) according to Claim 8.

## Revendications

1. Procédé de fonctionnement d'un chariot de manutention (1) au moins en partie automatisé, dans lequel au moins les étapes suivantes sont exécutées de manière automatisée par le chariot de manutention (1) :
a) détecter que le chariot de manutention (1) s'approche d'un point (2) auquel il doit changer de direction de déplacement, **caractérisé par**
b) contrôler au moins un critère de changement de direction prédéfini pour le changement de direction prévu, ledit au moins un critère de changement de direction prédéfini exigeant l'activation d'un signal de changement de direction (3) déterminé du chariot de manutention (1), devant être affiché pour le changement de direction prévu,
c) arrêter le chariot de manutention (1) si ledit au moins un critère de changement de direction n'est pas satisfait.

2. Procédé selon la revendication 1, dans lequel ledit au moins un critère de changement de direction prédéfini exige qu'un signal de changement de direction (3) déterminé du chariot de manutention (1), devant être affiché pour le changement de direction prévu, ait été actif pendant une durée préalable prédéfinie avant le déclenchement du changement de direction.

3. Procédé selon l'une des revendications précédentes, dans lequel ledit au moins un critère de changement de direction prédéfini exige que la vitesse de déplacement (4) du chariot de manutention (1) soit inférieure ou égale à une valeur limite prédéfinie (5).

4. Procédé selon l'une des revendications précédentes, dans lequel ledit au moins un critère de changement de direction prédéfini exige que la vitesse de rotation (6) du chariot de manutention (1) soit inférieure ou égale à une valeur limite prédéfinie (7) en fonction de la vitesse de déplacement (4) du chariot de manutention (1).

5. Procédé selon l'une des revendications précédentes, dans lequel ledit au moins un critère de changement de direction prédéfini est vérifié après le déclenchement du virage.

6. Programme informatique, comprenant des instructions qui, lorsqu'elles sont exécutées par un ordinateur, amènent l'ordinateur à mettre en œuvre le procédé selon l'une des revendications 1 à 5.

7. Support de stockage lisible par machine, sur lequel est stocké le programme informatique selon la revendication 6.

8. Appareil de commande (8) destiné à un chariot de manutention (1) à fonctionnement au moins en partie automatisé, configuré pour mettre en œuvre un procédé selon l'une des revendications 1 à 5.

9. Chariot de manutention (1) à fonctionnement au moins en partie automatisé, comprenant un appareil de commande (8) selon la revendication 8.
